# EUROPÄISCHE PATENTSCHRIFT

(11) **EP 1 385 253 B1**
(45) Veröffentlichungstag und Bekanntmachung des Hinweises auf die Patenterteilung: **24.12.2008**
(21) Anmeldenummer: 02078061.5
(22) Anmeldetag: 26.07.2002
(51) Int. Cl.: H02K 1/27

(54) **Hochgeschwindigkeitsrotor**
High speed rotor
Rotor pour haute vitesse

(43) Veröffentlichungstag der Anmeldung: 28.01.2004
(73) Patentinhaber: MS-Technologie GmbH, 3415 Hasle-Rüegsau (CH)
(72) Erfinder: Gysin, Hansjürg, 1429 Giez VD (CH)
(74) Vertreter: Arato, Laszlo

(56) Entgegenhaltungen:
- EP-A- 1 223 662
- DE-A- 3 622 231
- DE-A- 10 060 121
- US-A1- 2002 084 710
- PATENT ABSTRACTS OF JAPAN vol. 015, no. 240 (E-1079), 20. Juni 1991 (1991-06-20) -& JP 03 074151 A (AICHI EMERSON ELECTRIC CO LTD), 28. März 1991 (1991-03-28)
- PATENT ABSTRACTS OF JAPAN vol. 2000, no. 04, 31. August 2000 (2000-08-31) -& JP 2000 014062 A (DENSO CORP), 14. Januar 2000 (2000-01-14)

## Beschreibung

Die Erfindung betrifft einen Hochgeschwindigkeitsrotor, der vorzugsweise als Dauermagnetrotor ausgebildet ist und aus einer Welle mit zwei Schultern, einer Anzahl zu dieser Welle achsparallel liegenden und am Umfang dieser Welle verteilten Dauermagnetstäben, sowie einem die Dauermagnetstäbe umhüllenden Zylindermantel und einer Füllung der Zwischenräume dieser Teile besteht, sowie einem Verfahren zur Assemblierung der Teile zu einer steifen Einheit.

Es sind Dauermagnetrotoren von elektrischen Maschinen bekannt, die für höchste Leistungsdichte entwickelt worden sind. Gemeinsames Merkmal solcher dynamoelektrischer Maschinen, die als Generatoren an Abgasturboladern, Schwungradspeichern, oder als Motoren zum Treiben von Spinnturbinen, Zentrifugen, oder hochtourigen Schleifspindeln dienen, sind die hohe Drehgeschwindigkeit der Rotoren (n ∼ 10⁵) und ihre extreme Beanspruchung durch die herrschenden Fliehkräfte. Zeitgemässe Dauermagnete müssen hoch remanent sein, das heisst, dass sie nach der Induktion mit einem Elektromagnet viel vom gewonnenen Magnetismus auf die Dauer behalten. Zugleich sollen sie leichter sein als Metallmagnete um kleinere Fliehkräfte zu verursachen. Aus diesen genannten Gründen sind die Favoriten die aus Metalloxyden seltener Erden durch Sinterpressen hergestellten Dauermagnete. Die Gestaltung der Dauermagnetrotoren hat dafür zu sorgen, dass die hohe Schlagempfindlichkeit und die geringe Zug- und Torsionsfestigkeit der Dauermagnete aus Sinterkeramik durch den Einsatz einer korsettartigen Halterung der Dauermagnete so kompensiert wird, dass sie durch die Fliehkräfte nur durch Druck belastet sind. Die korsettartige Halterung wird vorzugsweise aus hochfesten, leichten und elektrisch wie magnetisch indifferenten Werkstoffen des Leichtbaus gestaltet. Solche Werkstoffe sind Wickellaminate mit hohem Faseranteil aus kunstharzimprägnierten Aramid-, Kohlesowie Glasfasern. Ein weiteres Problem der Dauermagnetrotorgestaltung ist, dass sich die Oberflächen der Dauermagnete aus Keramik mit Kunstharzen schlecht fügen, respektive kleben lassen. Mit anderen Worten; die Anwendung der Dauermagnete aus Keramik bedingt eine korsettartige Halterung für die präzise Anordnung und Positionierung dieser Teile, so dass auf die Verklebung der Teile verzichtet werden kann.

Diese Anforderungen erfüllen die Vorschläge der Schriften des Standes der Technik, wie die DE3224904, EP0996212 und US-1999000420862, nur bedingt. Die Lösungsvorschläge zeigen den Rotor mit einer umhüllenden Zylinderschale, die auch Panzerung genannt wird und für die Halterung der Magnete sowie für die durch die Schrumpfkraft erzeugte Vorspannung dient, so dass der Mantel bei der Montage durch Erhitzung aufgeweitet wird. Eine weitere Lösung für die dauerhafte Positionierung der Magnete durch Vorspannung besteht darin, dass sie mit in die Pollücken gelegte zwei ineinander schiebbare konische Keile, oder durch zwei ineinander passende zentrische, konische Teile erzeugt wird, die im Zentrum des Rotors oder aber in ihrer Peripherie miteinander verkeilt werden. Die auf diese Weise erzeugte Vorspannung hält die Magnete, von der Grösse und Existenz der Fliehkraft unabhängig, dauerhaft und fest in ihrer Lage.

DE 10060121 schlägt als Rotorwelle eines Dauermagnetrotors (2) die Verwendung von Stummelwellen (6, 7) mit Abschlussscheiben (4, 5) und darauf aufgeschweisste oder aufgeschrumpfte Aussenzylinder (3) aus Metall vor. Die Permanentmagnete (2) werden mit distanzhaltenden Füllstreifen (20) aus Metall zwischen dem Aussenzylinder (3) und dem hohlen Kern (1) angeordnet und sämtliche dort vorhandenen Hohlräume, durch radiale Kanäle (27), vom Innenraum (8) her beim Hochfahren des Rotors, mit einer schmelzflüssigen Harzmasse gefüllt. Die Aushärtung der Harzmasse erfolgt beim Schleudern, wobei die Drehzahl höher als die maximale Betriebsdrehzahl ist, und dabei unvermeidliche Risse und Brüche der Permanentmagnete (2) entstehen, die die Harzmasse verkleben und zugleich die Magnete vor Korrosion schützen. Wenn der Aussenzylinder (3) nicht auf die Abschlussscheiben (4, 5) aufgeschrumpft worden ist, wird der Aussenzylinder (3) zum Schluss mit den Abschlussscheiben (4, 5) der Stummelwellen (6, 7) verschweisst.

EP-1223662-A wiederum schlägt einen mit erstarrter Flüssigkeit vorgespannter Permanentmagnetrotor vor, der aus einem zentralen Wellenstück (6) mit zwei Endstücken (4, 5) sowie einer umhüllenden Panzerung (1) aus Kohlefaserverbund und Permanentmagneten (3) besteht, wobei sich die Panzerung (1) an die O-Ringe (7) der Endstücke (4, 5) schmiegt und die Permanentmagnete (3) bedeckt. Der Zwischenraum der Welle (6) und Panzerung (1) wird bei der Montage in einer Spann- und Spritzvorrichtung (8) mit den Permanentmagneten (3) und einer erstarrten Flüssigkeit gefüllt, die über Kanäle (26, 27) des Endstückes (4), und entlang von der Innenmantelfläche der Stützbüchse (1) her gepresst und um die Magnete (3) verteilt worden ist und diese, mit Ausnahme der Welle-Magnet-Passung (6 - 3), bedeckt. Nach erfolgter thermischer Aushärtung wird der Rotor aus der Vorrichtung entnommen und dessen Panzerung (1) spanabhebend auf Fertigmass bearbeitet.

Das Versagen der Hochleistungsrotoren zeigt allerdings, dass die Lösungen vom Stand der Technik nicht perfekt genug sind. Der Grund dafür liegt offenbar in den örtlichen Spannungsspitzen und somit in der mangelnden Gleichmässigkeit der Spannungsverteilung der Rotoren dieser Art. Denn lokale Spannungsspitzen führen zwangsweise zur örtlichen Überbeanspruchung und zum Bruch oder lokalen Ermüdung der Werkstoffe, was die Lockerung und Verschiebung der Komponenten zur Folge haben. Die kleinste Platzänderung der Teile im Rotor äussert sich wegen den hohen Drehzahlen als Unwucht, was zur örtlichen Berührung des Rotors mit dem Stator und zum Bruch der Rotorwelle oder sogar zur Explosion des Rotors führt.

Aufgabe der vorliegenden Erfindung ist die Weiterentwicklung der Dauermagnetrotoren der eingangs geschilderten Art, sowie die Herstellung der geänderten Ausführungen so, dass ein neuer Dauermagnetrotor mit wesentlich erhöhter Betriebssicherheit und gesteigerter Leistung entsteht.

Die Lösung dieser Aufgabe wird mit der homogenen Spannungsverteilung des kompletten Dauermagnetrotors und ihrer Komponenten erreicht. Dazu werden in den beiden Endbereichen der Rotorwelle Schultern gebildet, so dass zwischen den Schultern für die Aufnahme der Dauermagnetstäbe ein breiter Ringkanal entsteht. In diesen Ringkanal können die Dauermagnetstäbe beim Zusammenbau, vorzugsweise in senkrechter Lage der Welle, gestellt werden. Zur segmentierten Platzierung der Dauermagnetstäbe sind Zwischenstücke aus elektrisch und magnetisch indifferenten Werkstoffen vorgesehen. Der Zusammenbau der Teile wird mit dem Aufsatz der Panzerung abgeschlossen, indem ein dünnwandiger Zylinder über die Wellenschultern und den Kranz der platzierten Dauermagnetstäbe geschoben wird. Zum Verbund und zur vorgespannten Versiegelung der Einzelteile kann der assemblierte Dauermagnetrotor nach den rheologischen Bedürfnissen der Prozessführung lokal erwärmt und oder gekühlt und mit einer härtbaren Formmasse vollgepresst werden. Die in den Teilen des Dauermagnetrotors erzielte Vorspannung lässt mit der Härtung und dem Schwund der Formmasse etwas nach, was aber bei der Festlegung der Parameter des Spritzpressens berücksichtigt werden kann. Als besonderen Vorteil ist zu werten, dass durch die vorgeschlagene Konstruktion das Herstellungsverfahren gegenüber dem Stand der Technik rationell und preiswert ist.

Die Vorteile der Erfindung bezüglich der DE 10060121 liegt, mit Blick auf den Wettbewerb der Rotoren höchster Energiedichte, im Potenzial der Drehzahlsteigerung, weil der Rotor des DE 10060121 mit den Merkmalen der Erfindung (in dem die Ausbildung der welle einteilig ist und die unter Druck erhärtende Flüssigkeit die Hohlräume des Rotors einschliesslich der Magnete füllt) mit seiner höchsten Drehzahl, also des "Schleuderns", fortlaufend betrieben werden kann, die einiges höher ist als die Betriebsdrehzahl der DE 10060121.

Die Vorteile der Erfindung bezüglich der EP 1223662 A1 zeigt sich auch ein Potenzial der Drehzahlsteigerung, denn mit den Merkmalen der Erfindung (mit der Zuführung der Flüssigkeit durch den Welleneinstich 2j) könnten die Magnete (3) des Rotors der EP 1223662 mit der Welle (6) verbunden sein und damit die Panzerung (1) bei der Steigerung der Drehzahl entlasten.

Nachfolgend wird die Erfindung anhand von darstellenden Zeichnungen einer Ausführungsvariante wie folgt erläutert:
- Fig. 1: zeigt den neuen Dauermagnetrotor mit verschiedenen Detaillösungen, in teilweisem Längsschnitt.
- Fig. 2: zeigt den Querschnitt des in der Fig.1 gezeigten Dauermagnetrotors und die Verwendung einer Vorrichtung zu seinem zentrierten Zusammenbau.
- Fig. 3: zeigt eine dynamische Labyrinthdichtung der Rotorpanzerung (Detail A der Fig. 1).
- Fig. 4: zeigt eine elastisch-plastische Dichtung der Rotorpanzerung (Detail B der Fig. 1).

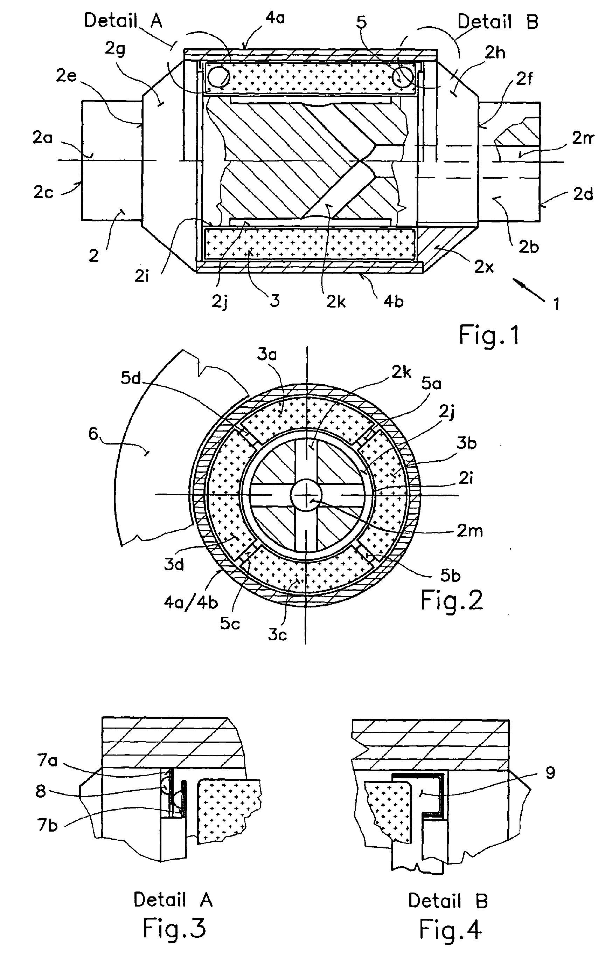

Der in Figur 1 gezeigte Dauermagnetrotor 1 besteht aus der Rotorwelle 2, den Dauermagneten 3, der Panzerung 4 und einer in die Kavitäten des Dauermagnetrotors 1 gespritzten, nicht gezeigten Füllmasse. Der Dauermagnetrotor 1 endet jeweils in den Wellenstummeln 2a, 2b, die von den Welleneden 2c, 2d bis zum Wellenbund 2e, 2f reichen und für die Aufnahme der nicht gezeigten Lagerung des Dauermagnetrotors 1 dienen. An den Wellenbunden 2e, 2f schliessen sich die Wellenschultern 2g und 2h an, die jeweils aus einem stumpfen Kegel mit zylindrischem Absatz und einer absteigenden Stufe bestehen. Zwischen der Wellenschultern 2g und 2h liegt ein Ringkanal 2i zur Aufnahme der Dauermagnete 3 und am Boden des Ringkanals 2i ist mindestens ein Einstich 2j vorhanden, der mit den radialen Zuführkanälen 2k und dem Anschlusskanal 2m in der Wellenachse verbunden ist. Die Panzerung 4a umhüllt entweder die Wellenschulter 2g, 2h oder als Alternative ist die Panzerung 4b zwischen der Wellenschulter 2g und der Wellenmutter 2x koaxial zur Rotorwelle 2 eingespannt.

Die Figur 2 zeigt, im Querschnitt des Dauermagnetrotors 1, die zirkulare Anordnung der Dauermagnete 3a-3d und die Hohlräume, die die Dauermagnete 3a-3d umhüllen und durch den Ringkanal 2i und den Einstich 2j, mit den radialen Zufuhrkanälen 2k und dem Anschlusskanal 2m kommunizierend verbunden sind. Die segmentierte Anordnung der Dauermagnete 3a-3d wird durch Zwischenstücke (5a-5d) erreicht, die aus elektrisch und magnetisch indifferenten Werkstoffen, beispielsweise aus Glaskeramik, bestehen und vorzugsweise zwischen den Wellenschultern 2g, 2h und dem Einstich 2j platziert werden.
Je nach Ausführung der Rotorwelle 2 wird die Panzerung 4a, 4b über die Wellenschultern 2g, 2h geschoben oder zwischen der Wellenschulter 2g und der Wellenmutter 2x gespannt. Zur Abdichtung der Fügestellen, die zwischen den Wellenschultern 2g, 2h und der Panzerung 4a, oder der Wellenschulter 2g und der Panzerung 4b und der Wellenmutter 2x entstehen, wird die Verwendung von Dichtringen vorgeschlagen. Diese können handelsüblicher Art, oder in besonders geeigneten Ausführungen, entsprechend der Details A und B der Figur 1 (vgl. ihre Vergrösserung in den Figuren 3 und 4) sein.
Ferner wird in der Figur 2 die Verwendung eines Zentrierrings 6 zur Beschränkung der asymmetrischen Aufweitung der Panzerung 4a, 4b vorgeschlagen. Dazu orientiert sich der Zentrierring 6 mit den Lagerbüchsen am Wellenstummel 2a, 2b des Dauermagnetrotors 1, so dass nach den Druckspritzen der Füllmasse und deren Aushärtung um die Panzerung 4a, 4b der angestrebte Luftspalt 6a mit dem Stator der elektrischen Maschine entsteht.

Die Figur 3 zeigt das Detail A der Figur 1 und damit den Vorschlag zur Abdichtung der Fügestelle die mit der Panzerung 4a und der Wellenschulter 2g gegeben ist. Dabei handelt es sich um eine Labyrinthdichtung, die jedoch im Gegensatz zur bekannten Art von angereihten Stichnuten aus mindestens zwei Scheibenringen 7a, 7b besteht. Die Scheibenringe 7a, 7b sind an der Panzerung 4a und am Absatz der Wellenschulter 2g (oder als analoge nichtgezeigte Ausführung, an der Panzerung 4b und einem Absatz der Wellenmutter 2x) wechselweise zentriert und weisen stellenweise Distanznoppen 8 auf, so dass sie zueinander und zur Wellenschulter einen Abstand wahren. Bei der vorgespannten Versiegelung des Dauermagnetrotors 1 weisen die Scheibenringe 7a, 7b der vordringenden Füllmasse den Weg. Der wechselnde Widerstand der Füllmasse um und zwischen den Scheibenringen 7a, 7b, 7n verringert den Druck der Füllmasse so, dass der Spalt zwischen der Panzerung und der Wellenschulter (Wellenmutter) gefüllt wird.

Die Figur 4 zeigt das Detail B der Figur 1 und damit einen weiteren Vorschlag zur Abdichtung der Fügestelle entsprechend der Aufgabenstellung der Beschreibung der Figur 3. Hier wird die Anwendung einer vorzugsweise mit Metallblech versteiften Manschette mit Dichtlippen aus Natur- oder Kunstkautschuk (9) vorgeschlagen.

Zur vorgespannten Versiegelung eignet sich die Verwendung einer härtbaren Formmasse aus Kunstharz. Solche Formmassen bestehen aus Epoxid-Harz oder aus ungesättigtem Polyester, aber auch aus Phenol-Formaldehyd und Melamin-Formaldehyd, sowie als Mischung der beiden. Der Spritzdruck beträgt 600 bis 2500 Bar. Die nach der Aushärtung der Formmasse erzielbare Vorspannung beträgt 600 bis 1200 Bar. Zur Verringerung des Schwundes der Formmasse empfiehlt sich die Verwendung von Füllstoffen wie Mikrokugeln und Mikrohohlkugeln (10 - 200 µ) aus Glas und Keramik mit einem Volumenanteil des Harzes von 50 %.

Die Kavitäten des Dauermagnetrotors 1 werden mit der Formmasse durch den Anschlusskanal 2m und die daraus verzweigten Zufuhrkanäle 2k der Rotorwelle 2, gemäss den Figuren 1 und 2, über den Einstich 2j und den Ringkanal 2i, um die Segmente der Dauermagnete 3a bis 3c, bis und mit zur Benetzung der Innenfläche der Panzerung 4a, 4b gefüllt. Bei diesem Vorgang entweicht die Hohlräume füllende Luft durch die Fügestellen (der Panzerung 4a, 4b mit den Wellenschultern 2g, 2h oder Wellenmutter 2x), oder wird durch den hohen Druck der Formmasse bis zur Unmerklichkeit komprimiert.
Durch thermische Massnahmen lässt sich das rheologische Verhalten der Formmasse im Prozess des Spritzpressens zweckmässig steuern. Die örtliche Kühlung, beispielsweise mit Peltier-Elementen, ermöglicht die Abfuhr der überschüssigen Reib- und Prozesswärme und damit die Verzögerung der Aushärtung der Füllmasse. Durch lokale Erwärmung der Fügestellen, etwa mit elektrischen Heizmatten, kann die partielle Vernetzung der Füllmasse bewirkt und damit die dichte Verschliessung der kritischen Fügestellen erreicht werden.

Die Anwendung dieser Massnahmen kann im Einklang mit der Verwendung der in Figur 2 angedeuteten Zentrierring 6 zur Beschränkung der asymmetrischen Aufweitung der Panzerung 4a, 4b erfolgen, so dass um den Dauermagnetrotor 1 der angestrebte Luftspalt 6a mit dem Stator der elektrischen Maschine entsteht.

Zur Krönung der Fertigung der Dauermagnetrotoren 1 folgt das statisch und dynamische Auswuchten, durch gezieltes Abtragen von Massenteilen, damit die Dreh- und Schwerachse des Rotors zusammenfallen. Zum Abtragen eignen sich die Wellenschultern 2g, 2h sowie die Wellenmutter 2x des Dauermagnetrotors 1. Die Prozedur dieser Massnahmen verkürzt die präzise Fertigung und den Zusammenbau der Teile und nicht zuletzt die Einschränkung der asymmetrischen Aufweitung der Panzerung 4a, 4b bei der vorgespannten Versiegelung.

## Patentansprüche

1. Hochgeschwindigkeitsrotor (1) für dynamoelektrische Maschinen hoher Leistungsdichte, bestehend aus einer Welle (2) mit Anschlusskanal (2m) und Zufuhrkanälen (2k) und einem zur Welle (2) koaxialen Zylindermantel aus kunstharzgetränkten Faserwerkstoffen als Panzerung (4), und einer Anzahl Dauermagnete (3), die zwischen der Welle (2) und der Panzerung (4) verteilt und mit Zwischenstücken (5) unterteilt sind, wobei sämtliche Hohlräume des Rotors (1) mit dem zur Rotorachse konzentrischen Anschlusskanal (2m) der Welle (2) verbunden und sämtliche Hohlräume mit einer zwischenraumfüllenden, komprimiert härtenden Füllmasse mit hohem Druck gefüllt sind, die zur vorgespannten Versiegelung und steifen Verbindung der Rotorteile (2, 3, 4, 5) zum Rotor (1) verbinden, **dadurch gekennzeichnet, dass** die beiden Enden (2a, 2d) der Rotorwelle (2) zu Wellenstummeln (2a, 2b) ausgebildet sind, die der Lagerung des Rotors dienen, und es am zylindrischen Umfang zwischen den Wellenstummeln (2a, 2b) der Welle (2) mindestens eine Wellenschulter (2g) und eine Wellenmutter (2x) gibt und zwischen der Wellenschulter (2g) und der Wellenmutter (2x) die Panzerung (4b) eingespannt ist, und sich zwischen der Wellenschulter (2g) und der Wellenmutter (2x) ein Ringkanal (2i) befindet, der zur Aufnahme der Dauermagnete (3a bis 3c) und der Zwischenstucke (5a bis 5d) dient und der Ringkanal (2i) einen Einstich (2j) hat, in den die Zufuhrkanäle (2k) münden.

2. Hochgeschwindigkeitsrotor (1) nach Anspruch 1 **dadurch gekennzeichnet, dass** er mindestens aus einer Welle (2) und einem zur Welle (2) koaxialen Zylindermantel als Panzerung (4), und einer Anzahl Dauermagneten (3), die zwischen der Welle (2) und der Panzerung (4) verteilt sind, besteht, und dass die Panzerung (4a) sich auf den Wellenschultern (2g, 2h) der Welle (2) befindet, und dass eine zwischenraumfüllende, komprimierte ausgehärtete Füllmasse, zur vorgespannten Versiegelung und steifen Verbindung von Rotor, Welle, Magneten und Panzerung (1, 2, 3, 4) verwendet wird, und dass die Welle (2) Wellenschultern (2g, 2h) hat und mindestens einen Zufuhrkanal (2m) für die Zuführung der Füllmasse, und einen Ringkanal (2i) zwischen den Wellenschultern (2g, 2h) zur Aufnahme der Dauermagnete (3, 3a bis 3c) und es Zwischenstücke (5a bis 5d) aus elektrisch nicht-leitenden Materialien gibt, die für die segmentierte Positionierung der Dauermagnete (3a bis 3c) verwendet werden.

3. Hochgeschwindigkeitsrotor (1) nach den Ansprüchen 1 und 2, **dadurch gekennzeichnet, dass** mindestens ein Ringkanal (2i) der Welle (2) zwischen der Wellenschulter (2g) und der Wellenmutter (2x) oder zwischen den Wellenschultern (2g, 2h) liegt und der Ringkanal (2i) mit den radial symmetrisch verteilten Zufuhrkanälen (2k) und diese mit dem Anschlusskanal (2m) der Welle (2) verbunden sind.

4. Hochgeschwindigkeitsrotor (1) nach den Ansprüchen 1 bis 3 **dadurch gekennzeichnet, dass** die Zwischenstücke (5a bis 5d) der Dauermagnete (3, 3a bis 3c) aus elektrisch nicht-leitenden Materialien bestehen.

5. Hochgeschwindigkeitsrotor (1) nach den Ansprüchen 1 bis 4, **dadurch gekennzeichnet, dass** zur Abdichtung der Berührungsstellen der Welle (2, 2g, 2h) und der Wellenmutter (2x) und der Panzerung (4a, 4b) aussensowie innenzentrierende Scheibenringe (7a, 7b) mit Distanznoppen (8) verwendet werden.

6. Hochgeschwindigkeitsrotor (1) nach den Ansprüchen 1 bis 4, **dadurch gekennzeichnet, dass** zur Abdichtung der Berührungsstellen der Welle (2, 2g, 2h, 2x) und der Panzerung (4a, 4b) eine mit Metallblech versteifte Manschette mit Dichtlippen aus Natur- oder Kunstkautschuk (9) verwendet wird.

7. Hochgeschwindigkeitsrotor (1) nach den Ansprüchen 1 bis 6 **dadurch gekennzeichnet, dass** die Füllmasse aus Polymeren wie Epoxydharz, ungesättigtem Polyesterharz, Phenol- oder Melamin-Formaldehyd oder der Mischung der beiden Letzteren besteht und nach Bedarf mit Füllstoffen gefüllt ist.

8. Hochgeschwindigkeitsrotor (1) nach Anspruch 1, **dadurch gekennzeichnet, dass** die kunstharzgetränkten Faserwerkstoffe aus Glas, Kohle, oder Aramide Fasern bestehen.

9. Verfahren zur Herstellung eines Hochgeschwindigkeitsrotors (1) nach den Ansprüchen 1 bis 9, **dadurch gekennzeichnet, dass** der Rotor (1) durch Spritzgiessen versiegelt wird und, zur Beschränkung der asymmetrischen Aufweitung der Panzerung (4a, 4b), der Rotor (1) in einem durch die Welle (2) geführten Zentrierring (6) gehalten wird, und dass der Rotor (1) während des Vergiessens je nach Bedarf mit Kälte oder Wärme behandelt wird.

## Claims

1. High speed rotor (1) for dynamo-electric machines of high power density, comprising of a spindle (2) with a connector channel (2m) and supply channels (2k) and a sheath (4), co-axial with the spindle(2) and made of fibre-reinforced resin for armouring, and a number of permanent magnets (3), which are distributed between the spindle (2) and the armouring (4) and are divided by inserts (5), trough witch the cavities of the rotor (1) are connected with the connector channel (2m) of the spindle, which is coaxial with the rotor axis and the cavities are filled under high pressure with a cavity filling, compressed cured filling compound that leads to a pre-tensioned sealing and a rigid joining of the rotor parts (2, 3, 4, 5) to the rotor (1) **characterised by** the fact that the ends of the spindle (2a, 2d) are blended into stubs (2a, 2b) for support of the spindle, and that on the cylindrical circumference between the stubs (2a, 2b) of the spindle (2) there is at least one spindle shoulder (2g) and a spindle nut (2x) and that between the spindle shoulder (2g) and the spindle nut (2x) the armouring is clamped, and that between the spindle shoulder (2g) and the spindle nut (2x) there is an annular channel (2i) that is used to receive the permanent magnets (3a to 3c) and the inserts (5a to 5d), and that the annular channel has a recess for the supply channels (2k).

2. High speed rotor (1) according to Claim 1, **characterised by** the fact that it consists of at least one spindle(2), a cylindrical shell-type armouring (4) that is coaxial with the spindle (2), and a number of permanent magnets (3), which are distributed between the spindle (2) and the armouring (4), and that the armouring (4a) is situated on the shoulders (2g, 2h) of the spindle (2), and that a cavity-filling, compressed cured filling compound is used, that leads to a pre-tensioned sealing and a rigid joining of rotor, spindle, magnets and armouring (1, 2, 3, 4), and that the spindle (2) has shoulders (2g, 2h) and at least one supply channel (2m) for the supply of the filler, and an annular channel (2i) between the spindle shoulders (2g, 2h) for the mounting the permanent magnets (3, 3a to 3c), and that there are inserts (5a to 5d) made of electrically non-conducting materials that are used for the segmented positioning of the permanent magnets (3a to 3c).

3. High speed rotor (1) according to Claims 1 and 2, **characterised by** the fact that at least one annular channel (2i) of the spindle (2) is situated between the spindle shoulder (2g) and the spindle nut(2x) or between the spindle shoulders (2g, 2h), and that that the annular channel (2i) is connected with the supply channels (2k) that are distributed symmetrically along the radius, which in turn are connected to the supply channel (2m) of the spindle (2).

4. High speed rotor (1) according to Claims 1 to 3, **characterised by** the fact that inserts (5a to 5d) of the permanent magnets (3, 3a to 3c) consist of electrically non-conducting materials.

5. High speed rotor (1) according to Claims 1 to 4, **characterised by** the fact that for the sealing of the points of contact between the spindle (2, 2g, 2h) and the spindle nuts (2x) and the armouring (4a, 4b) externally as well as internally centring washer rings with distance knobs are used.

6. High speed rotor (1) according to Claims 1 to 5, **characterised by** the fact that a cuff, reinforced with sheet metal and having sealing lips made of natural or synthetic rubber (9) is used to seal the points of contact between the spindle (2, 2g, 2h, 2x) and the armouring (4a, 4b).

7. High speed rotor (1) according to Claims 1 to 6, **characterised by** the fact that the filling compound consists of polymers such as epoxy resin, unsaturated polyester resin, phenol- or melamine-formaldehyde or a mixture of the last, and that filling materials are added as required.

8. High speed rotor (1) according to Claims 1 to 7, **characterised by** the fact the fibres that reinforce the resin consist of glass, carbon or aramid fibres.

9. Method of producing a High speed rotor (1) according to Claims 1 to 8, **characterised by** the fact that the rotor (1) is sealed by injection moulding, that the rotor (1) is contained by a centring ring (6) that is guided by the rotor spindle in order to limit the asymmetric expansion of the armouring, and that the rotor (1) is thermally treated during the casting as required.

## Revendications

1. Rotor à grande vitesse (1) pour machines dynamoélectriques à densité de puissance élevée, constitué d'un arbre (2) comprenant un canal de raccordement (2m) et des canaux d'amenée (2k) et d'une chemise extérieure coaxiale à l'arbre (2) fabriquée à partir de matériaux fibreux imprégnés de résine synthétique comme blindage (4), et d'un certain nombre d'aimants permanents (3) qui sont répartis entre l'arbre (2) et le blindage (4) et divisés par des pièces intermédiaires (5), toutes les cavités du rotor (1) étant reliées au canal de raccordement (2m) concentrique à l'axe du rotor de l'arbre (2) et toutes les cavités étant remplies par haute pression d'une matière de remplissage remplissant les interstices, durcissant par compression, qui est utilisée pour sceller par précontrainte et relier solidement les pièces de rotor (2, 3, 4, 5) pour obtenir le rotor (1), **caractérisé en ce que** les deux extrémités (2a, 2d) de l'arbre de rotor (2) sont conçues pour obtenir des bouts d'arbre (2a, 2b) qui servent à loger le rotor, et au moins un épaulement d'arbre (2g) et un écrou d'arbre (2x) sont présents sur la périphérie cylindrique entre les bouts d'arbre (2a, 2b) de l'arbre (2) et le blindage (4b) est encastré entre l'épaulement d'arbre (2g) et l'écrou d'arbre (2x), et un canal annulaire (2i) se situe entre l'épaulement d'arbre (2g) et l'écrou d'arbre (2x), lequel canal sert à loger les aimants permanents (3a à 3c) et les pièces intermédiaires (5a à 5d) et le canal annulaire (2i) présente une encoche (2j) dans laquelle débouchent les canaux d'amenée (2k).

2. Rotor à grande vitesse (1) selon la revendication 1, **caractérisé en ce qu'**il est constitué au moins d'un arbre (2) et d'une chemise extérieure coaxiale à l'arbre (2) comme blindage (4), et d'une pluralité d'aimants permanents (3) qui sont répartis entre l'arbre (2) et le blindage (4), et **en ce que** le blindage (4a) se situe sur les épaulements d'arbre (2g, 2h) de l'arbre (2), et **en ce qu'**une masse de remplissage durcie et comprimée, remplissant les interstices, est utilisée pour sceller par précontrainte et relier solidement le rotor, l'arbre, les aimants et le blindage (1, 2, 3, 4), et **en ce que** l'arbre (2) présente des épaulements d'arbre (2g, 2h) et au moins un canal d'amenée (2m) pour l'amenée de la masse de remplissage, et un canal annulaire (2i) entre les épaulements d'arbre (2g, 2h) pour loger les aimants permanents (3, 3a à 3c) et des pièces intermédiaires (5a à 5d) fabriquées à partir de matériaux électriquement non conducteurs sont présentes, qui sont utilisées pour le positionnement segmenté des aimants permanentes (3a à 3c).

3. Rotor à grande vitesse (1) selon les revendications 1 et 2, **caractérisé en ce qu'**au moins un canal annulaire (2i) de l'arbre (2) repose entre l'épaulement l'arbre (2g) et l'écrou d'arbre (2x) ou entre les épaulements d'arbre (2g, 2h) et le canal annulaire (2i) comprenant les canaux d'amenée (2k) répartis de façon radialement symétrique et ceux-ci sont reliés au canal de raccordement (2m) de l'arbre (2).

4. Rotor à grande vitesse (1) selon les revendications 1 à 3, **caractérisé en ce que** les pièces intermédiaires (5a à 5d) des aimants permanents (3, 3a à 3c) sont constitués de matériaux électriquement non conducteurs.

5. Rotor à grande vitesse (1) selon les revendications 1 à 4, **caractérisé en ce que** des couronnes rondelles annulaires (7a, 7b) centrées à l'extérieur comme à l'intérieur comprenant des picots d'écartement (8) sont utilisées pour étanchéifier les points de contact de l'arbre (2, 2g, 2h) et de l'écrou d'arbre (2x) et du blindage (4a, 4b).

6. Rotor à grande vitesse (1) selon les revendications 1 à 4, **caractérisé en ce qu'**un joint en U renforcé par une tôle métallique, doté de lèvres d'étanchéité en caoutchouc naturel ou synthétique (9), est utilisé pour étanchéifier les points de contact de l'arbre (2, 2g, 2h, 2x) et du blindage (4a, 4b).

7. Rotor à grande vitesse (1) selon les revendications 1 à 6, **caractérisé en ce que** la masse de remplissage est constituée de polymères comme la résine époxy, la résine polyester insaturée, de phénol-formaldéhyde ou de mélamine-formaldéhyde ou du mélange de ces deux derniers, et est remplie si besoin est de matériau de remplissage.

8. Rotor à grande vitesse (1) selon la revendication 1, **caractérisé en ce que** les matériaux fibreux imprégnés de résine synthétique sont constitués de verre, de carbone, ou de fibres d'aramide.

9. Procédé de fabrication d'un rotor à grande vitesse (1) selon les revendications 1 à 9, **caractérisé en ce que** le rotor (1) est scellé par moulage par injection et, pour limiter l'élargissement asymétrique du blindage (4a, 4b), le rotor (1) est maintenu dans une bague de centrage (6) guidée par l'arbre (2), et **en ce que** le rotor (1) subit pendant le moulage selon les besoins un traitement frigorifique ou calorifique.
